(19) Europäisches Patentamt / European Patent Office / Office européen des brevets

(11) **EP 3 934 111 B1**

(12) **FASCICULE DE BREVET EUROPEEN**

(45) Date de publication et mention
de la délivrance du brevet:
**11.01.2023  Bulletin 2023/02**

(21) Numéro de dépôt: **21181350.6**

(22) Date de dépôt: **24.06.2021**

(51) Classification Internationale des Brevets (IPC):
**H04B 3/54** *(2006.01)*    **H04L 45/12** *(2022.01)*
**H04W 40/02** *(2009.01)*

(52) Classification Coopérative des Brevets (CPC):
**H04B 3/54; H04W 40/02;** H04B 2203/5433;
H04B 2203/5479; H04L 45/12; Y02D 30/70

(54) **PROCEDE DE SELECTION D'UNE ROUTE DE COMMUNICATION**

VERFAHREN ZUR AUSWAHL EINES KOMMUNIKATIONSWEGES

METHOD FOR SELECTING A COMMUNICATION ROUTE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **01.07.2020  FR 2006938**

(43) Date de publication de la demande:
**05.01.2022  Bulletin 2022/01**

(73) Titulaire: **Sagemcom Energy & Telecom SAS
92500 Rueil-Malmaison (FR)**

(72) Inventeurs:
• **BAROIS, Jérôme
92500 RUEIL MALMAISON (FR)**
• **ROTER, Ziv
92500 RUEIL MALMAISON (FR)**
• **BARTHES, Julien
92500 RUEIL MALMAISON (FR)**

(74) Mandataire: **Cabinet Le Guen Maillet
3, impasse de la Vigie
CS 71840
35418 Saint-Malo Cedex (FR)**

(56) Documents cités:
**EP-A1- 2 999 163**

• **ANIL MENGI G3-PLC ALLIANCE GERMANY:
"Narrowband OFDM PLC specifications for
G3-PLC networks;C18", ITU-T DRAFT; STUDY
PERIOD 2021-2024; STUDY GROUP 15; SERIES
C18, INTERNATIONAL TELECOMMUNICATION
UNION, GENEVA ; CH , vol. 18/15 18 mars 2021
(2021-03-18), pages 1-277, XP044307267, Extrait
de l'Internet:
URL:https://www.itu.int/ifa/t/2017/sg15/do
cs/rgm/Q18-210308/C/T17-SG15RGM-Q18-21030
8 -C-0018.docx [extrait le 2021-03-18]**

**Description**

DOMAINE TECHNIQUE

Au moins un mode de réalisation concerne un procédé de sélection d'une route de communication entre un premier dispositif nœud et un second dispositif nœud d'un réseau maillé d'alimentation électrique utilisant des communications par courants porteurs en ligne, ledit second dispositif nœud étant atteignable depuis le premier dispositif nœud par au moins deux routes de communication différentes.

ETAT DE LA TECHNIQUE ANTERIEURE

Les communications par courants porteurs en ligne PLC (« PowerLine Communications » en anglais) se développent, notamment dans le cadre des réseaux d'alimentation électrique de type AMM (« Automated Meter Management » en anglais). Des réseaux de communication sont ainsi implémentés au-dessus de réseaux d'alimentation électrique pour la collecte automatisée pas un dispositif nœud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

Les communications par courants porteurs utilisent, par exemple, des protocoles de communication tel que le protocole G3-PLC (CPL de troisième génération : « Third Generation PLC » en terminologie anglo-saxonne. ITU-T G.9903). De tels réseaux CPL utilisant le protocole G3-PLC sont des réseaux dits maillés permettant d'étendre la portée des communications. Les dispositifs de tels réseaux CPL sont généralement appelés dispositifs nœuds. Un dispositif nœud, dit dispositif coordinateur, gère le réseau CPL de manière à organiser le partage d'un même support de communication : émission de balises de synchronisation, gestion de topologie, authentification, gestion d'un adressage local temporaire au sein du réseau géré. Le coordinateur est par exemple localisé dans un concentrateur de données. Des dispositifs nœuds, généralement des compteurs électriques intelligents, servent alors de relais pour le compte d'autres dispositifs nœuds du réseau CPL, i.e. d'autres compteurs électriques intelligents, lorsque ces derniers n'arrivent pas à recevoir directement des informations du coordinateur, et à transmettre directement des informations au concentrateur de données. Plusieurs relais peuvent ainsi être nécessaires pour permettre à un dispositif nœud de communiquer avec le coordinateur. Lorsqu'un dispositif nœud source souhaite communiquer avec un autre dispositif nœud, dit dispositif nœud destinataire, e.g. avec le coordinateur, une route de communication doit être établie entre ces deux nœuds. Pour ce faire, le protocole G3-PLC prévoit une méthode de recherche d'une route de communication permettant au dispositif nœud source, en collaboration avec le dispositif nœud destinataire, de déterminer quelle est la meilleure route de communication à un instant donné entre ces deux dispositifs nœuds. Lors d'une mise en œuvre de cette méthode, toutes les routes de communication possibles entre le dispositif nœud et le dispositif concentrateur de données sont envisagées et comparées à l'aide d'une fonction de coût définie par le protocole G3-PLC ou laissée au choix d'un programmeur. La route de communication minimisant la fonction de coût est alors choisie pour chaque échange de messages entre le dispositif nœud source et le dispositif nœud destinataire.

La norme G3-PLC définit dans son annexe B un coût de route. Un exemple de calcul d'un tel coût de route est décrit dans la demande de brevet EP 2 999 163. Ce coût de route est particulièrement adapté aux appareils supportant une seule et même bande fréquentielle parmi les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment. En effet, la norme G3-PLC ne permet l'utilisation que d'une seule desdites bandes fréquentielles pour un dispositif nœud donné. Plus exactement, les dispositifs nœuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Dans une évolution de la norme G3-PLC un canal RF (acronyme de radio-fréquence) peut être utilisé à la place d'une desdites bandes fréquentielles CPL. Dans la suite du document, les termes « bande fréquentielle » désignent indifféremment une bande fréquentielle CPL ou un canal RF.

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui ne permet pas d'augmenter le nombre d'échanges dans le réseau, par exemple pour introduire de nouvelles fonctionnalités, de nouveaux besoins applicatifs, etc.

Il est souhaitable de pallier ces différents inconvénients de l'état de la technique. Il est notamment souhaitable de proposer un procédé de communication par courant porteur en ligne permettant d'augmenter la capacité de nombre d'échanges dans le réseau. Dans le cas d'un tel procédé de communication, le coût de route défini dans l'annexe B de G3-PLC, n'est pas adapté.

Il est donc souhaitable de proposer un procédé permettant de déterminer une route de communication entre un dispositif nœud source et un dispositif nœud destinataire qui exploite au mieux les capacités de transmission entre dispositifs nœuds d'un réseau de communication maillé par courants porteurs en ligne.

EXPOSE DE L'INVENTION

Un procédé de sélection d'une route de communication entre un premier dispositif nœud et un second dispositif nœud est décrit. Les premier et second dispositifs nœuds appartiennent à un réseau maillé de communication par courants porteurs en ligne et/ou par radio-fréquences. Le second dispositif nœud est atteignable depuis le premier dispositif nœud par au moins deux routes de communication différentes. Le procédé comprend :

- obtenir un coût de route pour chacune desdites routes de communication ;et
- sélectionner, parmi lesdites routes de communication, la route de communication correspondant au coût de route le plus petit.

Pour une route donnée, le coût de route est égal à la somme des coûts de lien entre deux dispositifs nœuds successifs i et j sur ladite route. Le coût de lien entre deux dispositifs nœuds successifs est égal à une somme pondérée entre une valeur maximale parmi un coût du lien dans une direction avant et un coût de lien dans une direction arrière et un rapport entre un nombre de routes actives et un nombre maximal de routes actives d'une table de routage du dispositif nœud j. Un coût de lien dans une direction donnée dépend du coût du lien, dans ladite direction donnée, calculé pour chaque bande fréquentielle d'un ensemble de bandes fréquentielles utilisé par lesdits deux dispositifs nœuds successifs i et j pour communiquer, ledit ensemble comprenant au moins deux bandes fréquentielles différentes. Le coût de route proposé a pour avantage de traduire de façon paramétrable le gain de coût de route dû à une approche multi-bandes. En effet, un coût de lien dans une direction donnée dépend du coût du lien, dans ladite direction donnée, calculé pour chaque bande fréquentielle.

Dans un mode particulier de réalisation, les bandes fréquentielles dudit ensemble de bandes fréquentielles sont disjointes.

Dans un mode particulier de réalisation, ledit coût de lien par courants porteurs en ligne entre deux dispositifs nœuds successifs d'indices i et j est calculé comme suit :

$$LC_{i,j} = max\left(LC_{i \rightarrow j}, LC_{j \rightarrow i}\right) + adpKrt * \frac{NumberOfActiveRoutes_{CPL}}{MaximumNumberOfActiveRoutes} + adpKh$$

où *adpKrt* et *adpKh* sont des facteurs de pondération ;
$LC_{i \rightarrow j}$ est le coût de lien dans la direction avant et $LC_{j \rightarrow i}$ est le coût de lien dans la direction arrière ;
*NumberOfActiveRoutes_{CPL}* est un nombre de routes actives dans la table de routage interne du dispositif nœud j qui utilisent des communications par CPL;
*MaximumNumberOfActiveRoutes* est un nombre maximal de routes actives dans la table de routage interne du dispositif nœud j qui utilisent des communications par courants porteurs en ligne.

Dans un mode particulier de réalisation, ledit coût de lien radio-fréquences ($LC_{i,j}$) entre deux dispositifs nœuds successifs d'indices i et j est calculé comme suit :

$$LC_{i,j} = max\left(LC_{i \rightarrow j}, LC_{j \rightarrow i}\right) + adpKrt_{RF} * \frac{NumberOfActiveRoutes_{RF}}{MaximumNumberOfActiveRoutes}$$
$$+ adpKh_{RF}$$

Où *adpKrt_{RF}* et *adpKh_{RF}* sont des facteurs de pondération ;

$LC_{i \to j}$ est le coût de lien dans la direction avant et $LC_{j \to i}$ est le coût de lien dans la direction arrière ;

$NumberOfActiveRoutes_{RF}$ est un nombre de routes actives dans la table de routage interne du dispositif nœud j qui utilisent des communications par radio-fréquences;

$MaximumNumberOfActiveRoutes$ est un nombre maximal de routes actives dans la table de routage interne du dispositif nœud j.

Dans un mode particulier de réalisation, ledit coût de lien $LC_{i \to j}$ dans la direction avant, respectivement $LC_{j \to i}$ dans la direction arrière, est calculé comme suit

$$LC_{i \to j} = adpKhr * MOD_{Khr} + \frac{Min_{LC_{i \to j}}}{1 + \sum_{m=0, m \neq m0}^{NBP-1} \left( \frac{Min_{LC_{i \to j}} * adpKmb}{LC_{i \to j}[m] * 255} \right)}$$

où $LC_{i \to j}[m]$ est ledit coût de lien dans la direction avant pour une bande fréquentielle d'indice m ;

$MOD_{Khr}$ est égal à 1 pour un mode hyper-robuste, 0 sinon, ledit mode hyper-robuste étant un mode de transmission dans lequel un dispositif nœud transmet un même message simultanément sur une pluralité de bandes fréquentielles ;

NBP est un nombre de bandes fréquentielles utilisées pour la transmission ;

$Min_{LC_{i \to j}} = \min(LC_{i \to j}[m])$ ; et

$adpKhr$ et $adpKmb$ sont des facteurs de pondération.

Dans un mode particulier de réalisation, le coût de lien $LC_{i \to j}$ dans la direction avant, respectivement $LC_{j \to i}$ dans la direction arrière, est calculé comme suit :

$$LC_{i \to j} = adpKhr * MOD_{Khr} + \frac{1}{\sum_{m=0}^{NBP-1} \left( \frac{1}{LC_{i \to j}[m]} \right)}$$

où $LC_{i \to j}[m]$ est ledit coût de lien dans la direction avant pour une bande fréquentielle d'indice m ;

$MOD_{Khr}$ est égal à 1 pour un mode hyper-robuste, 0 sinon, ledit mode hyper-robuste étant un mode de transmission dans lequel un dispositif nœud transmet un même message simultanément sur une pluralité de bandes fréquentielles ;

NBP est un nombre de bandes fréquentielles utilisées pour la transmission ; et

$adpKhr$ est un facteur de pondération.

Dans un mode particulier de réalisation, ledit coût de lien $LC_{i \to j}[m]$ dans la direction avant, respectivement $LC_{j \to i}[m]$ dans la direction arrière, pour une bande fréquentielle est calculé comme suit :

$$LC_{i \to j}[m] = adpKr * MOD_{Kr} + adpKm * MOD_{Km}$$
$$+ adpKc[m] * \frac{(MaximumNumberOfTones - NumberOfActiveTones)}{MaximumNumberOfTones}$$
$$+ adpKq * MAX\left(0, MIN\left(1, \frac{adpHighLQIValue - LQI}{adpHighLQIValue - adpLowLQIValue}\right)\right)$$

où MODKr = 1 pour un mode robuste, 0 pour les autres modulations, une modulation selon ledit mode robuste comprenant successivement un codage Reed-Solomon, un codage convolutif, un codage par répétition de codes et une modulation BPSK;

$MOD_{Km}$ est égal à 3 pour des modulations DBPSK or BPSK y compris ledit mode robuste, est égal à 2 pour des modulations DQPSK ou QPSK, est égal à 1 pour des modulations D8PSK ou 8-PSK et 0 pour des modulations 16-QAM ;

adpKr, adpKm, adpKq sont des facteurs de pondération ;

adpKc[m] est un facteur de pondération défini par bande fréquentielle ;

LQI est une valeur représentative d'une qualité du lien dans la direction avant entre les dispositifs nœuds i et j ;
adpHighLQIValue et adpLowLQIValue sont des valeurs de seuil ;
MaximumNumberOfTones est le nombre de sous-porteuses disponibles ;
NumberOfActiveTones est le nombre de sous-porteuses actives.

Dans un mode particulier de réalisation, ledit coût de lien $LC_{i \to j}[m]$ dans la direction avant, respectivement $LC_{j \to i}[m]$ dans la direction arrière, pour un canal radio-fréquence est calculé comme suit :

$$LC_{i \to j}[m] = adpKq_{RF}$$

$$* MAX\left(0, MIN\left(1, \frac{adpHighLQIValue_{RF} - LQI_{RF}}{adpHighLQIValue_{RF} - adpLowLQIValue_{RF}}\right)\right)$$

$$+ \frac{adpKdc_{RF} * DutyCyclePenalty}{100}$$

Où :

- $adpKq_{RF}$ et $adpKdc_{RF}$ sont des facteurs de pondération ;
- adpHighLQIValue$_{RF}$ et adpLowLQIValue$_{RF}$ sont des valeurs de seuil ;
- $LQI_{RF}$ est une valeur représentative d'une qualité du lien radio-fréquence dans la direction avant entre les dispositifs nœuds i et j ;
- DutyCyclePenalty est une valeur traduisant un degré d'utilisation de la radio-fréquence déjà atteint par rapport à un maximum autorisé.

Dans un mode particulier de réalisation, ledit ensemble de bandes fréquentielles comprend :

- la bande fréquentielle CENELEC A ;
- la bande fréquentielle CENELEC B ;
- la bande fréquentielle FCC ou la bande fréquentielle ARIB ; et
- le canal RF de G3-PLC Hybrid RF.

Un dispositif nœud d'un réseau d'alimentation électrique maillé utilisant des communications par courants porteurs en ligne et/ou par radio-fréquences est décrit. Le dispositif nœud est atteignable depuis un autre dispositif nœud dudit réseau d'alimentation électrique par au moins deux routes de communication différentes. Le dispositif nœud comprend :

- des moyens pour obtenir un coût de route pour chacune desdites routes de communication; et
- des moyens pour sélectionner, parmi lesdites routes de communication, la route de communication correspondant au coût de route le plus petit.

Pour une route donnée, le coût de route est égal à la somme des coûts de lien entre deux dispositifs nœuds successifs i et j sur ladite route. Le coût de lien entre deux dispositifs nœuds successifs est égal à une somme pondérée entre une valeur maximale parmi un coût du lien dans une direction avant et un coût de lien dans une direction arrière et un rapport entre un nombre de route actives et un nombre maximal de routes actives d'une table de routage du dispositif nœud j. Un coût de lien dans une direction donnée dépend du coût du lien, dans ladite direction donnée, calculé pour chaque bande fréquentielle d'un ensemble de bandes fréquentielles utilisé par lesdits deux dispositifs nœuds successifs i et j pour communiquer, ledit ensemble comprenant au moins deux bandes fréquentielles différentes. Les modes de réalisation décrits en référence au procédé s'appliquent également au dispositif nœud.

Un réseau d'alimentation électrique maillé utilisant des communications par courants porteurs en ligne et/ou par radio-fréquences comprenant un tel dispositif nœud est également décrit.

Un produit programme d'ordinateur est décrit. Il comprend des instructions pour mettre en œuvre, par un dispositif nœud, le procédé selon l'un des modes de réalisation précédents, lorsque ledit programme est exécuté par un processeur du dispositif nœud.

Un support de stockage est également décrit. Il stocke un programme d'ordinateur comprenant des instructions pour mettre en œuvre, par un dispositif nœud, le procédé selon l'un des modes de réalisation précédents, lorsque ledit programme est exécuté par un processeur du dispositif nœud.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un réseau de communication maillé selon un mode de réalisation ;
[Fig. 2] illustre schématiquement un procédé de sélection d'une route de communication entre un premier dispositif nœud et un second dispositif nœud d'un réseau maillé d'alimentation électrique utilisant des communications par courants porteurs en ligne et/ou par radio-fréquences selon un mode de réalisation ;
[Fig. 3] illustre schématiquement un procédé de calcul d'un coût $LC\_(i{\rightarrow}j)$ d'un lien directionnel entre un premier dispositif nœud et un second dispositif nœud d'un réseau maillé d'alimentation électrique utilisant des communications par courants porteurs en lignes et/ou par radio-fréquences selon un mode particulier de réalisation ;
[Fig. 4] illustre schématiquement un exemple d'architecture matérielle d'un dispositif nœud du réseau de communication maillé selon un mode particulier de réalisation.

EXPOSE DETAILLE DE MODES DE REALISATION

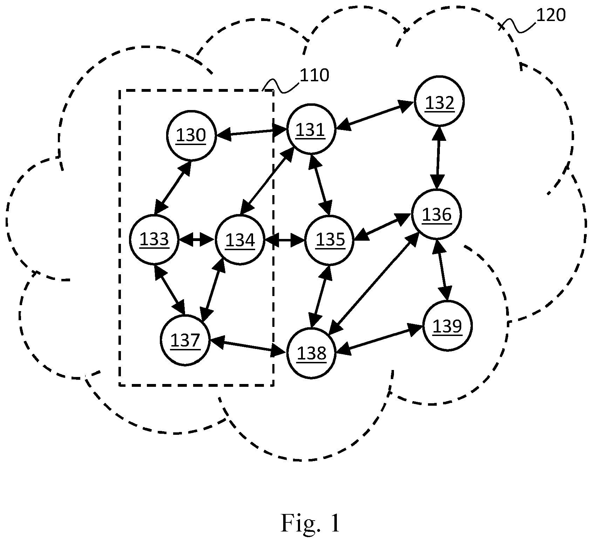

La **Fig. 1** illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC et/ou par radio-fréquences pour permettre à un dispositif nœud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs nœuds du réseau de communication maillé 120. Le réseau de communication maillé 120 peut comporter d'autres dispositifs nœuds, par exemple installés au niveau de transformateurs électriques. Le réseau de communication 120 a donc une structure maillée, telle que représentée schématiquement sur la Fig. 1 grâce à des flèches, où des dispositifs nœuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa.
La présente invention est ainsi particulièrement adaptée au contexte de la technologie G3-PLC (marque déposée) et de son extension G3-PLC Hybrid RF.
Le réseau de communication maillé 120 comporte ainsi une pluralité de dispositifs nœuds 130, 131, 132, 133, 134, 135, 136, 137, 138, 139. A chaque dispositif nœud du réseau de communication maillé 120 est associé un voisinage réseau. Sur la Fig. 1, le dispositif nœud 133 est associé à un voisinage réseau 110 englobant les dispositifs nœuds 130, 134 et 137. En effet, dans le réseau de communication maillé 120, un signal ou un message diffusé par un dispositif nœud (tel que le dispositif nœud 133) n'est en général pas visible en tout point dudit réseau de communication maillé. Chaque dispositif nœud émetteur de signaux ou de messages dispose alors d'un voisinage réseau, c'est-à-dire d'un sous-ensemble dudit réseau de communication maillé 120 dans lequel tout dispositif nœud peut recevoir de manière intelligible lesdits signaux ou messages directement en provenance du dispositif nœud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif nœud à la source desdits signaux et aussi potentiellement en fonction de caractéristiques du canal de communication (atténuation, bruit, impédance...).
Le réseau de communication maillé 120 s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif nœud du réseau ayant alors besoin uniquement d'avoir connaissance de son propre voisinage réseau pour router des données dans le réseau de communication maillé 120.
Pour découvrir une route appropriée dans le réseau de communication maillé 120 depuis un dispositif nœud source (par exemple le dispositif nœud 133) jusqu'à un dispositif nœud destination (par exemple le dispositif nœud 132), il est connu que le dispositif nœud source diffuse (« broadcast » en anglais) une requête de découverte de route, appelée RREQ (« Route REQuest » en anglais). Cette requête de découverte de route est reçue par chaque dispositif nœud dans le voisinage réseau dudit dispositif nœud source. Chaque dispositif nœud dans le voisinage réseau dudit dispositif nœud source relaie, par diffusion, ladite requête si ledit dispositif nœud en question n'est pas le dispositif nœud destination. Par diffusion de proche en proche, plusieurs requêtes de découverte de route sont typiquement reçues par le dispositif nœud destination, chacune de ces requêtes ayant suivi un chemin différent dans le réseau de communication maillé 120.

Chaque dispositif nœud qui est à l'origine d'un message, comme par exemple une requête de découverte de route, y inclut un identifiant qui lui est propre, ainsi qu'un numéro de séquence, tel que défini dans le protocole LOADng. Ce numéro de séquence est une valeur de compteur propre à chaque dispositif nœud du réseau de communication maillé 120. A chaque fois qu'un dispositif nœud génère un nouveau message, ledit dispositif nœud incrémente son compteur et inclut dans le message en question la valeur dudit compteur. Ainsi, lorsqu'un dispositif nœud reçoit un message, ledit dispositif nœud analyse l'identifiant du dispositif nœud à l'origine du message et le numéro de séquence inclus dans le message, et peut déterminer si le message reçu est effectivement un nouveau message ou une nouvelle copie d'un message déjà reçu.

Chaque dispositif nœud peut toutefois décider de ne pas relayer une requête de découverte de route, lorsqu'un ou plusieurs critères ne sont pas remplis. Notamment, avant de décider de relayer ladite requête, le dispositif nœud en question vérifie typiquement si ladite requête comporte une information représentative d'un coût de route, depuis le dispositif nœud source jusqu'au dispositif nœud en question, qui est meilleur que le coût de route représenté par une information contenue dans une autre requête de découverte de route précédemment reçue par le dispositif nœud en question. En d'autres termes, le dispositif nœud en question relaie, par diffusion, ladite requête si ladite requête concerne un chemin qui a suivi, depuis le dispositif nœud source jusqu'au dispositif nœud en question, un trajet de plus faible coût que toute autre requête précédemment reçue par le dispositif nœud en question (donc pour la même découverte de route).

Le coût d'une route peut s'appuyer sur une ou plusieurs métriques. Par exemple, le coût de route est un nombre de sauts (« hops » en anglais) subis par la copie en question depuis le dispositif nœud source. Selon un autre exemple, le coût de route est le résultat d'un calcul qui dépend de la bande passante des liens franchis, par la copie en question depuis le dispositif nœud source. Selon encore un autre exemple, le coût de route est proportionnel à la latence subie par la copie en question depuis le dispositif nœud source. D'autres métriques peuvent être utilisées pour établir un coût de route, c'est-à-dire un coût de transit, depuis le dispositif nœud source jusqu'au dispositif nœud destination.

Lorsqu'un dispositif nœud décide de relayer, par diffusion, une requête de découverte de route, le dispositif nœud en question met à jour l'information de coût de route contenue dans ladite requête, de manière à prendre en compte que ladite requête est passée par le dispositif nœud en question. Ainsi, selon un tel principe, plusieurs copies de la requête de découverte de route parviennent typiquement au dispositif nœud destination, chacune comportant une information de coût de route que ladite copie a suivi pour être propagée depuis le dispositif nœud source jusqu'au dispositif nœud destination. Le trajet emprunté par ladite requête de découverte de route associée au meilleur coût de route est ensuite sélectionné pour permettre au dispositif nœud source de transmettre des données au dispositif nœud destination. Pour activer la route en question le dispositif nœud destination transmet une réponse de découverte de route, appelée RREP (« Route REPly » en anglais).

Cette réponse de découverte de route est transmise de proche en proche en suivant le chemin inverse de la requête de découverte de route qui était associée au meilleur coût de route. Chaque dispositif nœud recevant la réponse de découverte de route met à jour une table de routage interne, au niveau de la couche liaison de données (DLL pour « Data Link Layer » en anglais) du modèle OSI (pour « Open Systems Interconnection » en anglais), afin d'y indiquer que tout message ultérieur transmis en mode point-à-point (« unicast » en anglais) depuis le dispositif nœud source en question vers le dispositif nœud destination en question doit être transmis ou relayé vers tel ou tel dispositif nœud de son voisinage réseau. Au sein de la couche liaison, aussi appelée couche MAC (« Medium Access Control » en anglais), les tables de routage sont préférentiellement implémentées dans une sous-couche d'adaptation en charge de la mise en œuvre du protocole de routage dans le réseau de communication maillé. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre du standard IEEE 802.15.4 et qui a été étendu à la technologie G3-PLC et G3-PLC Hybrid RF (marque déposée). A noter que le protocole 6LoWPAN s'appuie lui-même sur le protocole de routage de type réactif LOADng susmentionné.

Grâce aux tables de routage ainsi configurées, des communications point-à-point (« unicast » en anglais) peuvent être effectuées par toute paire de dispositifs nœuds du réseau de communication maillé 120. Des dispositifs nœuds intermédiaires servent donc de relais lorsque les dispositifs nœuds de ladite paire ne sont pas dans le voisinage réseau l'un de l'autre, les communications s'opèrent ainsi de proche en proche, chaque dispositif nœud s'appuyant sur un de ses propres voisins pour faire suivre des messages jusqu'à leurs destinataires respectifs.

Pour communiquer entre dispositifs nœuds voisins (c'est-à-dire des dispositifs nœuds qui sont dans le voisinage réseau l'un de l'autre), les messages sont transmis sous forme de trames modulées. Lorsqu'une trame modulée est spécifiquement adressée à un dispositif nœud voisin et qu'elle est correctement démodulée par celui-ci, ledit dispositif nœud voisin retransmet un acquittement ACK au dispositif nœud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

En termes de bandes fréquentielles utilisables dans le cadre de la mise en œuvre du réseau de communication maillé 120, on peut citer : la bande fréquentielle CENELEC A, qui va d'approximativement 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz; et le canal RF de G3-PLC Hybrid RF. Il est alors possible d'utiliser : un premier schéma de modulation à trente-six sous-porteuses dans la bande fréquentielle CENELEC A ; un second schéma de modulation à soixante-douze sous-porteuses dans la bande fréquentielle FCC ; un troisième schéma de modulation à cinquante-quatre sous-porteuses dans la bande fréquentielle ARIB ; un quatrième schéma de modulation à seize sous-porteuses dans la bande fréquentielle CENELEC B; et un cinquième schéma de modulation pour le canal RF de G3-PLC Hybrid RF. Il apparaît de ce qui précède qu'un dispositif nœud peut utiliser simultanément plusieurs bandes fréquentielles pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif nœud étant donné qu'elles se recouvrent l'une l'autre.

Les canaux de courants porteurs (« power line channel » en anglais) et le canal RF sont des supports très hostiles. Les caractéristiques et paramètres du canal varient selon la fréquence, l'emplacement, l'heure et le type d'équipements branchés dessus. Les régions à basses fréquences (de 10 kHz à 200 kHz) sont plus particulièrement sensibles aux interférences. Outre le bruit de fond, le canal est sujet aux bruits impulsionnels et aux interférences en bande étroite. La technologie OFDM utilisé par G3-PLC fait appel à des techniques avancées de codage canal. Cette combinaison autorise une communication très robuste en présence d'interférences en bande étroite, de bruits impulsionnels et d'atténuations sélectives de la fréquence.

A cet effet, un encodeur FEC (acronyme anglais de « Forward Error Correction ») est notamment utilisé. Cet encodeur FEC est par exemple composé d'un encodeur de Reed-Salomon et d'un encodeur convolutif qui permettent d'introduire de la redondance au niveau bit. Ils permettent ainsi à un nœud destinataire de retrouver des bits perdus à cause de bruit de fond et de bruits impulsionnels.

Dans le cadre préférentiel de la norme G3-PLC, plusieurs types de modulation sont définis, parmi lesquels : BPSK, DBPSK, QPSK, DQPSK, 8-PSK, D8PSK, 16-QAM et un mode dit robuste (ou ROBO). En mode normal, l'encodeur FEC (« Forward Error Correction » ou FEC en anglais) est composé d'un encodeur Reed-Solomon et d'un encodeur convolutif. En mode robuste, l'encodeur FEC (« Forward Error Correction » ou FEC en anglais) est composé d'un encodeur Reed-Solomon et d'un encodeur convolutif comme dans le mode normal. Toutefois, dans le cas du mode robuste, l'encodeur convolutif est suivi par un code de répétition. Le code de répétition génère 4 copies de chaque bit en sortie de l'encodeur convolutif. Ainsi, le système est rendu plus robuste aux dégradations du canal au prix d'une réduction du débit par 4. Les données ainsi obtenues sont ensuite passées à l'entrée d'un entrelaceur (« interleaver » en anglais).

G3-PLC définit également un mode super-robuste dans lequel le code de répétition génère 6 copies de chaque bit en sortie de l'encodeur convolutif, ce qui accroît la robustesse. Ce mode n'est utilisé que pour une partie du contrôle de trame FCH (acronyme anglais de « Frame Control Header ») d'une trame de données La modulation dans les modes robuste et super-robuste est une modulation BPSK.

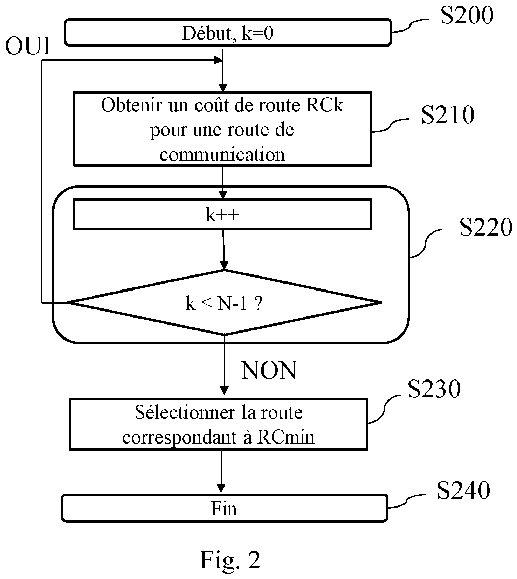

La **Fig. 2** illustre schématiquement un procédé de sélection d'une route de communication entre un premier dispositif nœud et un second dispositif nœud d'un réseau maillé d'alimentation électrique utilisant des communications par courants porteurs en ligne et/ou par radio-fréquences. Le second dispositif nœud, e.g. le nœud 132, est atteignable depuis le premier dispositif nœud, e.g. 133, par au moins une première route de communication, e.g. la route passant par les nœuds 130, 131 et une seconde route de communication, e.g. la route passant par les nœuds 134, 135 et 136, différente de ladite première route de communication. De manière générale, le second dispositif nœud est atteignable depuis le premier dispositif nœud par une pluralité de N routes de communication, N étant un entier positif. Dans la suite, pour faciliter les notations, chaque route possible est identifiée par un indice k avec k nombre entier variant de 0 à N-1.

Le procédé démarre à une étape S200 où k est égal à zéro.

Lors d'une étape S210, le second dispositif nœud obtient un coût de route RCk pour une route de communication d'indice k parmi la pluralité de N routes de communication. Le coût de route $RC_k$ est égal à la somme des coûts de liens $LC_{i,j}$ entre deux dispositifs nœuds successifs i et j, i.e. situés dans le même voisinage réseau. Par exemple, dans le cas de la première route de communication, le coût de la route $RC_1 = L_{133,130} + L_{130,131} + L_{131,132}$ et le coût RC2 de la seconde route de communication est égal à $L_{133,134} + L_{134,135} + L_{135,136} + L_{136,132}$.

Le coût d'un lien $LC_{i,j}$ entre deux dispositifs nœuds successifs est fonction de la valeur maximale parmi un coût du lien $LC_{i \to j}$ dans la direction avant, i.e. du dispositif nœud émetteur vers le dispositif nœud récepteur, et un coût de lien $LC_{j \to i}$ dans la direction arrière, i.e. du dispositif nœud récepteur vers le dispositif nœud émetteur.

Ainsi, dans un mode particulier de réalisation, le coût de lien $LC_{i,j}$ entre un dispositif nœud i et un dispositif nœud j appartenant à son voisinage réseau est égal à une somme pondérée entre une valeur maximale parmi un coût du lien dans une direction avant $LC_{i \to j}$ et un coût de lien dans une direction arrière $LC_{j \to i}$ et un rapport entre un nombre de routes actives et un nombre maximal de routes actives. Par exemple, le coût de lien CPL $LC_{i,j}$ est calculé comme suit :

$$LC_{i,j} = max\left(LC_{i \to j}, LC_{j \to i}\right) + adpKrt * \frac{NumberOfActiveRoutes_{CPL}}{MaximumNumberOfActiveRoutes} + adpKh$$

où $LC_{i \to j}$ and $LC_{j \to i}$ sont les coûts des liens directionnels (directions avant et arrière, respectivement) entre le dispositif nœud i et le dispositif nœud j ;

max(a,b) est une fonction qui retourne la valeur a si a>b et b sinon,

$NumberOfActiveRoutes_{CPL}$ est le nombre de routes actives dans la table de routage interne du dispositif nœud j qui utilisent une communication par CPL, e.g. il s'agit du nombre de routes actives pour lesquelles le champ MediaType défini dans G3-PLC Hybrid est positionné à 0 dans les entrées respectives de la table de routage;

$MaximumNumberOfActiveRoutes$ est le nombre maximal de routes actives dans la table de routage interne du dispositif nœud j ;

adpKh est un facteur de pondération (« weight » en anglais) représentative du coût d'un saut;

et adpKrt est un facteur de pondération associé au nombre de routes actives dans la table de routage du dispositif nœud j.

A titre d'exemple, adpKrt a pour valeur 0 et adpKh a pour valeur 4.

Le coût de lien RF est quant à lui calculé à partir des formules de l'extension RF de la norme G3 :

$$LC_{i,j} = max\left(LC_{i \to j}, LC_{j \to i}\right) + adpKrt_{RF} * \frac{NumberOfActiveRoutes_{RF}}{MaximumNumberOfActiveRoutes} + adpKh_{RF}$$

Où $adpKrt_{RF}$ et $adpKh_{RF}$ sont des facteurs de pondération ;

$NumberOfActiveRoutes_{RF}$ est le nombre de routes actives dans la table de routage interne du dispositif nœud qui utilisent une communication par radio-fréquences, e.g. il s'agit du nombre de routes actives pour lesquelles le champ MediaType défini dans G3-PLC Hybrid est positionné à 1 (RF) dans les entrées respectives de la table de routage.

Il est à noter que la valeur adpKh s'ajoute à chaque étape S210. A la fin, le second dispositif nœud pourra comparer les routes potentielles, et préférer une avec moins de sauts.

Selon un mode de réalisation particulier, une métrique particulière est définie pour déterminer les coûts des liens directionnels afin de s'adapter à des dispositifs nœuds qui ont des capacités de transmission de type multi-bandes. Un dispositif nœud a des capacités multi-bandes dans le cas où il est configuré pour pouvoir utiliser simultanément plusieurs bandes fréquentielles différentes, e.g. CENELEC-A et FCC ou FCC et le canal RF, au lieu de choisir une bande unique. Dans un mode particulier de réalisation, les bandes fréquentielles sont plus particulièrement disjointes. Par exemple, le dispositif nœud en question peut fragmenter le message en différents fragments selon le protocole 6LoWPAN. Le procédé de fragmentation est plus particulièrement décrit dans la section 5.3 de la recommandation RFC 4944 (publiée en septembre 2007). Chaque fragment est alors envoyé indépendamment des autres fragments sur des bandes fréquentielles qui peuvent être différentes. Les bandes fréquentielles associées sont par exemple sélectionnées dans l'ensemble des bandes fréquentielles autorisées par G3-PLC et son extension G3-PLC Hybrid RF, i.e. CENELEC A, CENELEC B, ARIB, FCC et le canal RF. Dans une variante, les premières et secondes bandes fréquentielles associées sont sélectionnées dans un sous-ensemble des bandes fréquentielles autorisées par G3-PLC et G3-PLC hybrid RF, le sous-ensemble comprenant au moins deux bandes parmi toutes les bandes autorisées par G3-PLC et G3-PLC Hybrid RF.

Dans un autre mode de réalisation, un dispositif nœud ayant des capacités multi-bandes peut transmettre le même message simultanément dans toutes les bandes fréquentielles de l'ensemble de bandes fréquentielles prises en charge (par l'émetteur et le récepteur). Ce mode de transmission est appelé dans la suite le mode hyper-robuste. Dans chaque bande fréquentielle, le mode robuste de G3-PLC est alors utilisé. De cette façon, en cas de large perturbation fréquentielle sur une bande fréquentielle, le message peut malgré tout parvenir à passer sur une autre bande fréquentielle. En effet, le récepteur n'a besoin de réussir à capter le message que sur une seule des bandes fréquentielles sur lesquelles il a été émis. Le mode hyper-robuste est un mode particulier nouvellement défini pour le cas de dispositif nœud ayant des capacités multi-bandes.

Dans un autre mode de réalisation, un dispositif nœud ayant des capacités multi-bandes peut transmettre un message sur l'ensemble des bandes fréquentielles, lesquelles constituent alors une bande fréquentielle dite étendue.

Dans tous ces modes de réalisation, la capacité multi-bandes d'un dispositif nœud est caractérisée par le fait que le nœud est capable d'exploiter plusieurs bandes fréquentielles simultanément au lieu d'une seule et unique bande comme c'est le cas classiquement dans le cas de la norme G3-PLC. Un dispositif ayant des capacités multi-bandes peut bénéficier des caractéristiques des différentes bandes fréquentielles en termes de débit, portée, résistance aux perturbateurs.

Le coût de route tel que défini par G3-PLC dans son annexe D ne permet pas de tenir compte de ces capacités multi-bandes de dispositif nœud.En effet, la norme de communication G3-PLC ne permet l'utilisation qu'une seule bande fréquentielle pour un réseau donné. Selon un mode de réalisation particulier, le coût du lien $LC_{i \to j}$ dans une direction donnée, i.e. dans la direction avant ou arrière, dépend du coût du lien, dans ladite direction donnée, calculé pour chaque bande fréquentielle $LC_{i \to j}[m]$ de l'ensemble de bandes fréquentielles utilisé par lesdits deux dispositifs nœuds successifs i et j pour communiquer, ledit ensemble comprenant au moins deux bandes fréquentielles différentes.

Dans un mode particulier de réalisation, les bandes fréquentielles dudit ensemble de bandes fréquentielles sont plus particulièrement disjointes.

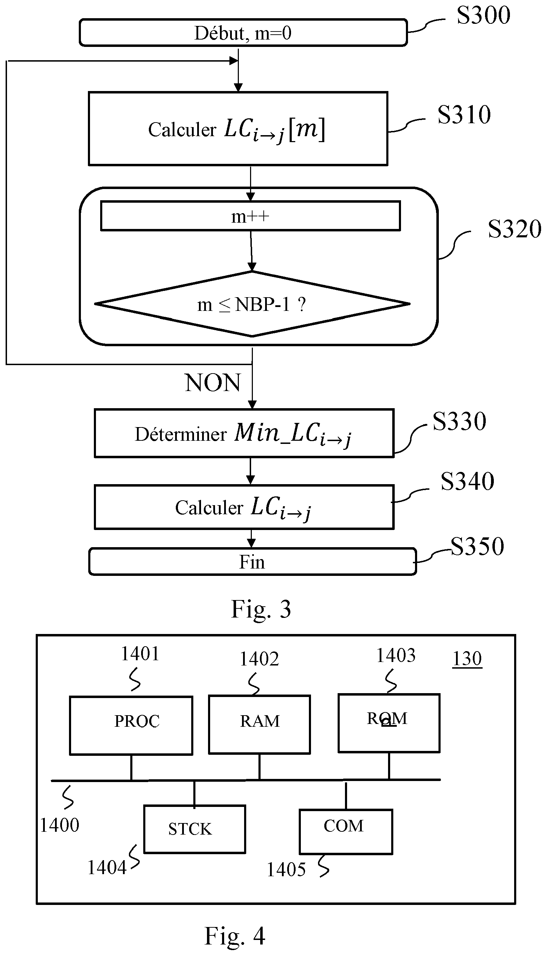

La **Fig. 3** illustre schématiquement un procédé de calcul d'un coût $LC_{i \to j}$ d'un lien directionnel entre un premier dispositif nœud et un second dispositif nœud d'un réseau maillé d'alimentation électrique utilisant des communications par courants porteurs en ligne et/ou par radio fréquences. Dans ce mode de réalisation, le coût $LC_{i \to j}$ d'un lien directionnel est calculé à partir d'un coût $LC_{i \to j}[m]$ de lien directionnel par bande fréquentielle (« bandplan » en anglais pour le CPL, ou canal RF), m étant un indice identifiant la bande fréquentielle, m est un entier variant de 0 à NBP-1 où NBP est un entier égal au nombre de bandes fréquentielles, e.g. NBP = 5. Par exemple, m=0 correspond à la bande CENELEC-A, m=1 correspond à la bande FCC, m=2 correspond à la bande CENELEC-B, m=3 correspond à la bande ARIB et m=4 correspond au canal RF.

Le procédé commence à une étape S300 avec m=0.

Lors d'une étape S310, $LC_{i \to j}[m]$ dans le cas CPL est calculé comme suit :

$$LC_{i \to j}[m] = adpKr * MOD_{Kr} + adpKm * MOD_{Km}$$
$$+ adpKc[m] * \frac{(MaximumNumberOfTones - NumberOfActiveTones)}{MaximumNumberOfTones}$$
$$+ adpKq * MAX\left(0, MIN\left(1, \frac{adpHighLQIValue - LQI}{adpHighLQIValue - adpLowLQIValue}\right)\right)$$

où :

- $MOD_{Kr}$ = 1 pour le mode robuste, 0 pour les autres modulations ;
- $MOD_{Km}$ = 3 pour les modulations DBPSK or BPSK (y compris le mode robuste), 2 pour les modulations DQPSK ou QPSK, 1 pour les modulations D8PSK ou 8-PSK et 0 pour les modulations. 16-QAM ;
- adpKr, adpKm, adpKq sont des facteurs de pondération dont les valeurs sont prédéfinies ;
- adpKr est un facteur de pondération associé au mode robuste ;
- adpKm est un facteur de pondération associé à la modulation ;
- adpKc[m] est un facteur de pondération défini pour chaque bande fréquentielle et est associé au nombre de sous-porteuses actives par rapport au nombre total de sous-porteuse disponibles. A titre d'exemple illustratif, adpKc[0]= 2 et adpKc[1]= 1, adpKc[0] étant associé à la bande CENELEC-A et adpKc[1] étant associé à la bande FCC. En effet, la bande FCC offre plus de sous-porteuses que la bande CENELEC-A, il est donc logique d'avoir un adpKc[1] inférieur au adpKc[0] pour le prendre en compte et ainsi obtenir un résultat comparable entre les différentes bande ;
- LQI (acronyme anglais de « Link Quality Indicator ») est une valeur représentative de qualité du lien entre les dispositifs nœuds i et j, le nœud j étant le nœud courant ;

- *adpHighLQIValue* est une valeur représentative d'un seuil au-dessus duquel une valeur de LQI est considérée comme traduisant un lien « fiable » ;
- *adpLowLQIValue* est une valeur représentative d'un seuil en-dessous duquel une valeur de LQI est considérée comme traduisant un lien « non fiable » ;
- adpKq est un facteur de pondération associé au LQI ;
- MaximumNumberOfTones est le nombre de tonalités/sous-porteuses disponibles, e.g. MaximumNumberOfTones est égal à 36 pour CENELEC-A et 72 pour FCC . Une carte des tonalités («tone map» en anglais) est une liste de sous-porteuses utilisées pour communiquer dans une bande fréquentielle donnée. Ces sous-porteuses sont choisies pour subir le moins d'interférences possibles au vu de l'environnement ; et
- NumberOfActiveTones est le nombre de tonalités/sous-porteuses actives. Il est à noter que la carte des tonalités indique un nombre de « groupes de sous-porteuses » actives (par des bits à 1 correspondants). Le nombre de sous-porteuses actives est obtenu en multipliant ce nombre « groupes de sous-porteuses » par le nombre de sous-porteuses par groupe, e.g. 3 en FCC et 6 en CENELEC-A.

$LC_{i,j}$ [m] dans le cas de l'extension G3-PLC Hybrid RF de la norme G3 est calculé comme suit :

$$
\begin{aligned}
LC_{i \to j}[m] = adpKq_{RF} \\
* MAX \left( 0, MIN \left( 1, \frac{adpHighLQIValue_{RF} - LQI_{RF}}{adpHighLQIValue_{RF} - adpLowLQIValue_{RF}} \right) \right) \\
+ \frac{adpKdc_{RF} * DutyCyclePenalty}{100}
\end{aligned}
$$

Où :

- $adpKq_{RF}$ et $adpKdc_{RF}$ sont des facteurs de pondération dont les valeurs sont prédéfinies ;
- $adpHighLQIValue_{RF}$ est une valeur représentative d'un seuil au-dessus duquel une valeur de LQI est considérée comme traduisant un lien radio-fréquence « fiable » ;
- $adpLowLQIValue_{RF}$ est une valeur représentative d'un seuil en-dessous duquel une valeur de LQI est considérée comme traduisant un lien radio-fréquence « non fiable » ;
- $LQI_{RF}$ est une valeur représentative d'une qualité du lien radio-fréquence dans la direction avant entre les dispositifs nœuds i et j ;
- DutyCyclePenalty est une valeur traduisant un degré d'utilisation de la radio-fréquence déjà atteint par rapport à un maximum autorisé. Il doit être positionné à une valeur de configuration notée macDutyCycleUsage_RF pour le calcul de coût de lien en direction arrière, et à une valeur de rapport cyclique (« duty cycle » en anglais) du voisin pour la direction avant. Si l'information de rapport cyclique du voisin n'est pas disponible, la valeur est positionnée à 0. Le rapport cyclique indique la fraction sur une période pendant laquelle le voisin est actif.

Il est à noter que les valeurs des différents paramètres adpX, avec X=Kq, adpHighLQIValue, adpLowLQIValue, Kc[m], etc, mentionnés peuvent être ajustées en fonction de l'expérience terrain et transmises au travers de la couche applicative des équipements. Certaines de ces valeurs peuvent être égales à 0.

Lors d'une étape S320, m est incrémenté de 1 et comparé à NBP-1. Si m est inférieur ou égal à NBP-1 alors le procédé continue à l'étape S310, sinon il continue à l'étape S330.

Une fois que $LC_{i,j}$ [m] est calculé pour toutes les bandes fréquentielles, la valeur la plus petite $Min\_LC_{i \to j}$ est déterminée lors d'une étape S330. $Min\_LC_{i \to j}$ correspond à m=mo i.e. $Min\_LC_{i \to j} = LC_{i \to j}$ [$m_0$].

Lors d'une étape S240, le coût directionnel $LC_{i \to j}$ global est calculé.

Selon un premier mode de réalisation, pour chaque $LC_{i \to j}$[m] différent de $Min_{LC_{i \to j}}$, sa contribution à l'amélioration du coût de lien directionnel global (i.e. $LC_{i \to j}$) est calculée en utilisant la formule suivante: $\frac{Min_{LC_{i \to j}} * adpKmb}{LC_{i \to j}[m] * 255}$ .

Le coût directionnel $LC_{i \to j}$ global est donc calculé comme suit :

$$LC_{i \to j} = adpKhr * MOD_{Khr} + \cfrac{Min_{LC_{i \to j}}}{1 + \sum_{m=0, m \neq m0}^{NBP-1}\left(\cfrac{Min_{LC_{i \to j}} * adpKmb}{LC_{i \to j}[m] * 255}\right)} \text{ (Eq. 1)}$$

où :

- $MOD_{Khr}$ = 1 pour le mode hyper-robuste, 0 sinon ;
- $adpKhr$ est un facteur de pondération associé au mode hyper-robuste dans le calcul du coût de lien, e.g. $adpKhr$ = 4 ;
- $adpKmb$ est un facteur de pondération pour le calcul de route dans le cas multi-bandes, e.g. $adpKmb$ = 130.

Pour illustrer numériquement le résultat de ce premier mode de réalisation, prenons par exemple le cas d'un $LC_{i \to j}[0]$=50 pour la bande CENELEC-A et $LC_{i \to j}[1]$=100 pour la bande FCC (sans mode hyper-robuste). Soit un facteur de pondération faible $adpKmb$=55, le $LC_{i \to j}$ global est alors égal à 50/(1+50/100*55/255) = 45 (en arrondissant).

L'ajout de la bande FCC, même avec un coût de route élevé, permet donc d'améliorer le coût de route par rapport au cas CENELEC-A seul, mais de façon modérée (compte tenu du facteur de bonification faible).

Selon un second mode de réalisation, la formule suivante est utilisée au lieu de la formule donnée par (Eq. 1) pour calculer le coût directionnel $LC_{i \to j}$ global :

$$LC_{i \to j} = adpKhr * MOD_{Khr} + \cfrac{1}{\sum_{m=0}^{NBP-1}\left(\cfrac{1}{LC_{i \to j}[m]}\right)} \text{ (Eq. 2)}$$

Cette formule est plus simple que celle de (Eq.l) mais ne permet pas une pondération par le facteur de pondération $adpKmb$. Pour illustrer numériquement le résultat de ce second mode de réalisation, prenons par exemple le cas d'un $LC_{i \to j}[0]$=50 pour la bande CENELEC-A et $LC_{i \to j}[1]$=100 pour la bande FCC (sans mode hyper-robuste). Le $LC_{i \to j}$ global est alors égal à 1/(1/50+1/100) = 33 (en arrondissant). L'ajout de la bande FCC, même avec un coût de route élevé, permet donc d'améliorer le coût de route global par rapport au cas CENELEC - A seul.

Dans un mode particulier de réalisation le mode hyper-robuste n'est pas utilisé dans les équations (1) et (2) et *adpKhr* a une valeur nulle.

Le procédé de la Fig. 3 se termine à une étape S350.

Les étapes S300 à S350 sont répétées pour calculer le coût directionnel global $LC_{j \to i}$ et ainsi en déduire le coût $LC_{i,j}$.

En référence à nouveau à la Fig. 2, lors d'une étape S220, k est incrémenté de 1 et comparé à N-1. Si k est inférieur ou égal à N-1 alors le procédé continue à l'étape S210, sinon il continue à l'étape S230.

Lors d'une étape S230, le second dispositif nœud sélectionne, parmi lesdites N routes de communication, la route de communication correspondant au coût de route le plus petit. Le procédé de la Fig. 2 se termine à l'étape S240.

La métrique initiale telle que définie dans l'annexe B de G3-PLC ne prend en compte que la proportion de sous porteuses actives. Ainsi, le même résultat est obtenu pour CENELEC avec 18 tonalités (proportion de 50%) et FCC avec 36 tonalités (proportion de 50% également). La nouvelle métrique proposée pour déterminer un coût de route a pour avantage de traduire de façon paramétrable le gain de coût de route dû à une approche multi-bandes. Comme illustré par les différents exemples numériques, l'ajout d'une bande fréquentielle même avec un coût de route élevé permet d'améliorer le coût de route global par rapport au cas de l'utilisation d'une seule et unique bande fréquentielle.

Elle permet optionnellement de tenir compte d'un mode robuste particulier, i.e. le mode hyper-robuste.

Elle couvre également le cas mono-bande tel que défini dans l'annexe B de la norme G3-PLC actuelle. En effet, en utilisant des valeurs d'adpKc[m] identiques sur toutes les bandes, la métrique donne exactement la même valeur.

Cette métrique est utilisable facilement sur les dispositifs nœuds existants grâce une simple mise à jour logicielle.

La **Fig. 4** illustre schématiquement un exemple d'architecture matérielle d'un dispositif nœud 130 du réseau de communication maillé 120 selon un mode de réalisation. On note que la Fig. 4 pourrait aussi illustrer schématiquement un exemple d'architecture matérielle d'un module de traitement compris dans le dispositif nœud.

Selon l'exemple d'architecture matérielle représenté à la Fig. 4, le dispositif nœud 130 comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage telle qu'un disque dur (ou un lecteur de support de stockage, tel qu'un lecteur de cartes SD (« Secure Digital » en anglais) 1404 ; au moins une interface de communication 1405 permettant au dispositif nœud 130 de communiquer avec les dispositifs nœuds appartenant à son voisinage réseau, e.g. les nœuds 131 et 133.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le dispositif nœud est mis sous tension, le processeur 1401 est capable de lire de la RAM 1402 des instructions et de les exécuter. Ces instructions forment un programme d'ordinateur causant la mise en œuvre, par le processeur 1401, de tout ou partie des procédés décrits ci-après en relation avec les Figs. 2 et 3.

Les procédés décrits ci-après en relation avec les Figs. 2 et 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif nœud 130 comprend de la circuiterie électronique configurée pour mettre en œuvre les procédés décrits en relation avec les Figs. 2 et 3.

**Revendications**

1. Un procédé de sélection d'une route de communication entre un premier dispositif nœud et un second dispositif nœud d'un réseau maillé de communication par courants porteurs en ligne et/ou par radio-fréquences, ledit second dispositif nœud étant atteignable depuis le premier dispositif nœud par au moins deux routes de communication différentes, ledit procédé comprenant :

   - obtenir (S210) un coût de route pour chacune desdites routes de communication ; et
   - sélectionner (S230), parmi lesdites routes de communication, la route de communication correspondant au coût de route le plus petit ;

   **caractérisé en ce que**, pour une route donnée, le coût de route (RCk) est égal à la somme des coûts de lien ($LC_{i,j}$) entre deux dispositifs nœuds successifs i et j sur ladite route, ledit coût de lien ($LC_{i,j}$) entre deux dispositifs nœuds successifs est égal à une somme pondérée entre une valeur maximale parmi un coût du lien dans une direction avant ($LC_{i,j}$) et un coût de lien dans une direction arrière ($LC_{j \to i}$) et un rapport entre un nombre de routes actives et un nombre maximal de routes actives d'une table de routage du dispositif nœud j et dans lequel ledit coût de lien $LC_{i \to j}$ dans la direction avant, respectivement $LC_{j \to i}$ dans la direction arrière, est calculé comme suit :

$$LC_{i \to j} = adpKhr * MOD_{Khr} + \frac{Min_{LC_{i \to j}}}{1 + \sum_{m=0, m \neq m0}^{NBP-1} \left( \frac{Min_{LC_{i \to j}} * adpKmb}{LC_{i \to j}[m] * 255} \right)}$$

   ou comme suit :

$$LC_{i \to j} = adpKhr * MOD_{Khr} + \frac{1}{\sum_{m=0}^{NBP-1} \left( \frac{1}{LC_{i \to j}[m]} \right)}$$

   où $LC_{i \to j}[m]$ est ledit coût de lien dans la direction avant pour une bande fréquentielle d'indice m ;
   $MOD_{Khr}$ est égal à 1 pour un mode hyper-robuste, 0 sinon, ledit mode hyper-robuste étant un mode de transmission dans lequel un dispositif nœud transmet un même message simultanément sur une pluralité de bandes fréquentielles ;
   NBP est un nombre de bandes fréquentielles d'un ensemble de bandes fréquentielles utilisées pour la transmission, ledit ensemble de bandes fréquentielles comprenant au moins deux bandes fréquentielles différentes ;
   $Min_{LC_{i \to j}} = min( LC_{i \to j}[m])$ et correspond à la bande fréquentielle d'indice mo ; et *adpKhr* et *adpKmb* sont des facteurs de pondération.

2. Le procédé selon la revendication 1, dans lequel ledit coût de lien par courants porteurs en ligne ($LC_{i,j}$) entre deux dispositifs nœuds successifs d'indices i et j est calculé comme suit :

$$LC_{i,j} = max\left(LC_{i \to j}, LC_{j \to i}\right) + adpKrt * \frac{NumberOfActiveRoutes_{CPL}}{MaximumNumberOfActiveRoutes} + adpKh$$

où *adpKrt* et *adpKh* sont des facteurs de pondération ;
$LC_{i \to j}$ est le coût de lien dans la direction avant et $LC_{j \to i}$ est le coût de lien dans la direction arrière ;
$NumberOfActiveRoutes_{CPL}$ est un nombre de routes actives dans la table de routage interne du dispositif nœud j qui utilisent des communications par courants porteurs en ligne;
$MaximumNumberOfActiveRoutes$ est un nombre maximal de routes actives dans la table de routage interne du dispositif nœud j.

3. Le procédé selon la revendication 1 ou 2, dans lequel ledit coût de lien radio-fréquences ($LC_{i,j}$) entre deux dispositifs nœuds successifs d'indices i et j est calculé comme suit :

$$LC_{i,j} = max\left(LC_{i \to j}, LC_{j \to i}\right) + adpKrt_{RF} * \frac{NumberOfActiveRoutes_{RF}}{MaximumNumberOfActiveRoutes} + adpKh_{RF}$$

Où *adpKrt_{RF}* et *adpKh_{RF}* sont des facteurs de pondération ;
$LC_{i \to j}$ est le coût de lien dans la direction avant et $LC_{j \to i}$ est le coût de lien dans la direction arrière ;
$NumberOfActiveRoutes_{RF}$ est un nombre de routes actives dans la table de routage interne du dispositif nœud j qui utilisent des communications par radio-fréquences;
$MaximumNumberOfActiveRoutes$ est un nombre maximal de routes actives dans la table de routage interne du dispositif nœud j.

4. Le procédé selon l'une des revendications 1 à 3, dans lequel ledit coût de lien $LC_{i \to j}[m]$ dans la direction avant, respectivement $LC_{j \to i}[m]$ dans la direction arrière, pour une bande fréquentielle par courants porteurs en ligne est calculé comme suit :

$$LC_{i \to j}[m] = adpKr * MOD_{Kr} + adpKm * MOD_{Km}$$
$$+ adpKc[m] * \frac{(MaximumNumberOfTones - NumberOfActiveTones)}{MaximumNumberOfTones}$$
$$+ adpKq * MAX\left(0, MIN\left(1, \frac{adpHighLQIValue - LQI}{adpHighLQIValue - adpLowLQIValue}\right)\right)$$

où MODKr = 1 pour un mode robuste, 0 pour les autres modulations, une modulation selon ledit mode robuste comprenant successivement un codage Reed-Solomon, un codage convolutif, un codage par répétition de codes et une modulation BPSK;
$MOD_{Km}$ est égal à 3 pour des modulations DBPSK or BPSK y compris ledit mode robuste, est égal à 2 pour des modulations DQPSK ou QPSK, est égal à 1 pour des modulations D8PSK ou 8-PSK et 0 pour des modulations. 16-QAM ;
adpKr, adpKm, adpKq sont des facteurs de pondération ;
adpKc[m] est un facteur de pondération défini par bande fréquentielle ;
LQI est une valeur représentative d'une qualité du lien dans la direction avant entre les dispositifs nœuds i et j ;
adpHighLQIValue et adpLowLQIValue sont des valeurs de seuil ;
MaximumNumberOfTones est le nombre de sous-porteuses disponibles ;
NumberOfActiveTones est le nombre de sous-porteuses actives.

5. Le procédé selon l'une des revendications 1 à 4, dans lequel ledit coût de lien $LC_{i \to j}[m]$ dans la direction avant, respectivement $LC_{j \to i}[m]$ dans la direction arrière, pour un canal radio-fréquence est calculé comme suit :

$$LC_{i \to j}[m] = adpKq_{RF}$$
$$* MAX\left(0, MIN\left(1, \frac{adpHighLQIValue_{RF} - LQI_{RF}}{adpHighLQIValue_{RF} - adpLowLQIValue_{RF}}\right)\right)$$
$$+ \frac{adpKdc_{RF} * DutyCyclePenalty}{100}$$

Où:

- $adpKq_{RF}$ et $adpKdc_{RF}$ sont des facteurs de pondération ;
- adpHighLQIValue$_{RF}$ et adpLowLQIValue$_{RF}$ sont des valeurs de seuil ;
- $LQI_{RF}$ est une valeur représentative d'une qualité du lien radio-fréquence dans la direction avant entre les dispositifs nœuds i et j ; et
- DutyCyclePenalty est une valeur traduisant un degré d'utilisation de la radio-fréquence déjà atteint par rapport à un maximum autorisé

**6.** Procédé selon l'une quelconque des revendications 1 à 5, dans lequel ledit ensemble de bandes fréquentielles comprend :

la bande fréquentielle CENELEC A ;
la bande fréquentielle CENELEC B ;
la bande fréquentielle FCC ou la bande fréquentielle ARIB ; et
le canal RF de G3-PLC Hybrid RF.

**7.** Un dispositif nœud d'un réseau d'alimentation électrique maillé utilisant des communications par courants porteurs en ligne et/ou par radio-fréquences, ledit dispositif nœud étant atteignable depuis un autre dispositif nœud dudit réseau d'alimentation électrique par au moins deux routes de communication différentes, ledit dispositif nœud comprenant :

des moyens pour obtenir un coût de route pour chacune desdites routes de communication; et
des moyens pour sélectionner, parmi lesdites routes de communication, la route de communication correspondant au coût de route le plus petit,
**caractérisé en ce que**, pour une route donnée, le coût de route (RCk) est égal à la somme des coûts de lien ($LC_{i,j}$) entre deux dispositifs nœuds successifs i et j sur ladite route, ledit coût de lien ($LC_{i,j}$) entre deux dispositifs nœuds successifs est égal à une somme pondérée entre une valeur maximale parmi un coût du lien dans une direction avant ($LC_{i,j}$) et un coût de lien dans une direction arrière ($LC_{j \to i}$) et un rapport entre un nombre de route actives et un nombre maximal de routes actives d'une table de routage du dispositif nœud j et dans lequel ledit coût de lien $LC_{i \to j}$ dans la direction avant, respectivement $LC_{j \to i}$ dans la direction arrière, est calculé comme suit :

$$LC_{i \to j} = adpKhr * MOD_{Khr} + \frac{Min_{LC_{i \to j}}}{1 + \sum_{m=0, m \neq m0}^{NBP-1}\left(\frac{Min_{LC_{i \to j}} * adpKmb}{LC_{i \to j}[m] * 255}\right)}$$

ou comme suit

$$LC_{i \to j} = adpKhr * MOD_{Khr} + \frac{1}{\sum_{m=0}^{NBP-1}\left(\frac{1}{LC_{i \to j}[m]}\right)}$$

où $LC_{i \to j}[m]$ est ledit coût de lien dans la direction avant pour une bande fréquentielle d'indice m ;
$MOD_{Khr}$ est égal à 1 pour un mode hyper-robuste, 0 sinon, ledit mode hyper-robuste étant un mode de transmission dans lequel un dispositif nœud transmet un même message simultanément sur une pluralité de bandes fréquentielles ;

NBP est un nombre de bandes fréquentielles d'un ensemble de bandes fréquentielles utilisées pour la transmission, ledit ensemble de bandes fréquentielles comprenant au moins deux bandes fréquentielles différentes ; $Min_{LCi \to j}$ = min( $LC_{i \to j}$ [$m$]) et correspond à la bande fréquentielle d'indice $m_0$ ; et $adpKhr$ et $adpKmb$ sont des facteurs de pondération.

**8.** Un réseau d'alimentation électrique maillé utilisant des communications par courants porteurs en ligne et/ou par radio-fréquences comprenant un dispositif nœud selon la revendication 7.

**9.** Un produit programme d'ordinateur **caractérisé en ce qu'**il comprend des instructions pour mettre en œuvre, par un dispositif nœud, le procédé selon l'une quelconque des revendications 1 à 6, lorsque ledit programme est exécuté par un processeur du dispositif nœud.

**10.** Un support de stockage **caractérisé en ce qu'**il stocke un programme d'ordinateur comprenant des instructions pour mettre en œuvre, par un dispositif nœud, le procédé selon l'une quelconque des revendications 1 à 6, lorsque ledit programme est exécuté par un processeur du dispositif nœud.

**Patentansprüche**

**1.** Verfahren zur Auswahl einer Kommunikationsroute zwischen einer ersten Knotenvorrichtung und einer zweiten Knotenvorrichtung eines vermaschten Powerlineund/oder Funkfrequenz-Kommunikationsnetzwerks, wobei die zweite Knotenvorrichtung ausgehend von der ersten Knotenvorrichtung über mindestens zwei verschiedene Kommunikationsrouten erreichbar ist, wobei das Verfahren enthält:

- Erhalt (S210) eines Routenpreises für jede der Kommunikationsrouten; und
- Auswahl (S230), unter den Kommunikationsrouten, der dem geringsten Routenpreis entsprechenden Kommunikationsroute;
**dadurch gekennzeichnet, dass** für eine gegebene Route der Routenpreis (RCk) gleich der Summe der Verbindungspreise (LC$_{i,j}$) zwischen zwei aufeinanderfolgenden Knotenvorrichtungen i und j auf der Route ist, der Verbindungspreis (LC$_{i,j}$) zwischen zwei aufeinanderfolgenden Knotenvorrichtungen gleich einer zwischen einem maximalen Wert des Preises der Verbindung in einer Vorwärtsrichtung (LC$_{i \to j}$) und einem Verbindungspreis in einer Rückwärtsrichtung (LC$_{j \to i}$) gewichteten Summe und einem Verhältnis zwischen einer Anzahl von aktiven Routen und einer maximalen Anzahl von aktiven Routen einer Routingtabelle der Knotenvorrichtung j ist, und der Verbindungspreis LC$_{i \to j}$ in der Vorwärtsrichtung bzw. LC$_{j \to i}$ in der Rückwärtsrichtung folgendermaßen berechnet wird:

$$LC_{i \to j} = adpKhr * MOD_{Khr} + \frac{Min_{LC_{i \to j}}}{1 + \sum_{m=0, m \neq 0}^{NBP-1} \left( \frac{Min_{LC_{i \to j}} * adpKmb}{LC_{i \to j}[m] + 255} \right)}$$

oder folgendermaßen:

$$LC_{i \to j} = adpKhr * MOD_{Khr} + \frac{1}{\sum_{m=0}^{NBP-1} \left( \frac{1}{LC_{i \to j}[m]} \right)}$$

wobei $LC_{i \to j}[m]$ der Verbindungspreis in der Vorwärtsrichtung für ein Frequenzband mit dem Index m ist; $MOD_{Khr}$ ist für einen hyperrobusten Modus gleich 1, sonst 0, wobei der hyperrobuste Modus ein Übertragungsmodus ist, bei dem eine Knotenvorrichtung eine gleiche Nachricht gleichzeitig auf einer Vielzahl von Frequenzbändern überträgt; NBP ist eine Anzahl von Frequenzbändern einer Einheit von für die Übertragung verwendeten Frequenzbändern, wobei die Einheit von Frequenzbändern mindestens zwei unterschiedliche Frequenzbänder enthält; $Min_{LCi \to j}$ = $min(LC_{i \to j}[m])$ und entspricht dem Frequenzband mit dem Index $m_0$; und $adpKhr$ und $adpKmb$ sind Gewichtungsfaktoren.

**2.** Verfahren nach Anspruch 1, wobei der Powerline-Verbindungspreis (LC$_{i,j}$) zwischen zwei aufeinanderfolgenden Knotenvorrichtungen mit den Indices i und j folgendermaßen berechnet wird:

$$LC_{i,j} = max\left(LC_{i\to j}, LC_{j\to i}\right) + adpKrt * \frac{NumberOfActiveRoutes_{CPL}}{MaximumNumberOfActiveRoutes} + adpKh$$

wobei *adpKrt* und *adpKh* Gewichtungsfaktoren sind;
$LC_{i\to j}$ ist der Verbindungspreis in der Vorwärtsrichtung und $LC_{j\to i}$ der Verbindungspreis in der Rückwärtsrichtung;
*NumberOfActiveRoutes$_{CPL}$* ist eine Anzahl von aktiven Routen in der inneren Routingtabelle der Knotenvorrichtung j, die Powerline-Kommunikationen verwenden;
*MaximumNumberOfActiveRoutes* ist eine maximale Anzahl von aktiven Routen in der inneren Routingtabelle der Knotenvorrichtung j.

3.  Verfahren nach Anspruch 1 oder 2, wobei der Funkfrequenz-Verbindungspreis *(LC$_{i,j}$)* zwischen zwei aufeinanderfolgenden Knotenvorrichtungen mit den Indices i und j folgendermaßen berechnet wird:

$$LC_{i,j} = max\left(LC_{i\to j}, LC_{j\to i}\right) + adpKrt_{RF} * \frac{NumberOfActiveRoutes_{RF}}{MaximumNumberOfActiveRoutes} + adpKh_{RF}$$

wobei *adpKrt$_{RF}$* und *adpKh$_{RF}$* Gewichtungsfaktoren sind;
$LC_{i\to j}$ ist der Verbindungspreis in der Vorwärtsrichtung und $LC_{j\to i}$ der Verbindungspreis in der Rückwärtsrichtung;
*NumberOfActiveRoutes$_{RF}$* ist eine Anzahl von aktiven Routen in der inneren Routingtabelle der Knotenvorrichtung j, die Funkfrequenz-Kommunikationen verwenden;
*MaximumNumberOfActiveRoutes* ist eine maximale Anzahl von aktiven Routen in der inneren Routingtabelle der Knotenvorrichtung j.

4.  Verfahren nach einem der Ansprüche 1 bis 3, wobei der Verbindungspreis $LC_{i\to j}[m]$ in der Vorwärtsrichtung bzw. $LC_{j\to i}[m]$ in der Rückwärtsrichtung für ein Powerline-Frequenzband folgendermaßen berechnet wird:

$$LC_{i\to j}[m] = adpKr * MOD_{Kr} + adpKm * MOD_{Km}$$
$$+ adpKc[m] * \frac{(MaximumNumberOfTones - NumberOfActiveTones)}{MaximumNumberOfTones}$$
$$+ adpKq * MAX\left(0, Min\left(1, \frac{adpHighLQIValue - LQI}{adpHighLQIValue - adpLowLQIValue}\right)\right)$$

wobei *MOD$_{Kr}$* = 1 für einen robusten Modus, 0 für die anderen Modulationen ist, wobei eine Modulation gemäß dem robusten Modus nacheinander eine Reed-Solomon-Codierung, eine Faltungscodierung, eine Codierung durch Wiederholung von Codes und eine BPSK-Modulation enthält;
*MOD$_{Km}$* für DBPSK- oder BPSK-Modulationen einschließlich dem robusten Modus ist gleich 3, für DQPSK- oder QPSK-Modulationen gleich 2, für D8PSK- oder 8-PSK-Modulationen gleich 1 und für 16-QAM-Modulationen gleich 0;
*adpKr, adpKm, adpKq* sind Gewichtungsfaktoren;
*adpKc[m]* ist ein durch Frequenzband definierter Gewichtungsfaktor;
*LQI* ist ein für eine Qualität der Verbindung in der Vorwärtsrichtung zwischen den Knotenvorrichtungen i und j repräsentativer Wert;
*adpHighLQIValue* und *adpLowLQIValue* sind Schwellwerte;
*MaximumNumberOfTones* ist die Anzahl von verfügbaren Unterträgern;
*NumberOfActiveTones* ist die Anzahl von aktiven Unterträgern.

5. Verfahren nach einem der Ansprüche 1 bis 4, wobei der Verbindungspreis $LC_{i \to j}[m]$ in der Vorwärtsrichtung bzw. $LC_{j \to i}[m]$ in der Rückwärtsrichtung für einen Funkfrequenzkanal folgendermaßen berechnet wird:

$$LC_{i \to j}[m] = adpKq_{RF} \\ * MAX\left(0, Min\left(1, \frac{adpHighLQIValue_{RF} - LQI_{RF}}{adpHighLQIValue_{RF} - adpLowLQIValue_{RF}}\right)\right) \\ + \frac{adpKdc_{RF} * DutyCyclePenalty}{100}$$

wobei:

• $adpKq_{RF}$ und $adpKdc_{RF}$ Gewichtungsfaktoren sind;
• $adpHighLQIValue_{RF}$ und $adpLowLQIValue_{RF}$ Schwellwerte sind;
• $LQI_{RF}$ ein für eine Qualität der Funkfrequenzverbindung in der Vorwärtsrichtung zwischen den Knotenvorrichtungen i und j repräsentativer Wert ist; und
• $DutyCyclePenalty$ ein Wert ist, der einen bereits erreichten Benutzungsgrad der Funkfrequenz bezüglich einem erlaubten Maximum ausdrückt.

6. Verfahren nach einem der Ansprüche 1 bis 5, wobei die Einheit von Frequenzbändern enthält:

das Frequenzband CENELEC A;
das Frequenzband CENELEC B;
das Frequenzband FCC oder das Frequenzband ARIB; und
den RF-Kanal von G3-PLC Hybrid RF.

7. Knotenvorrichtung eines vermaschten Stromversorgungsnetzes, das Powerlineund/oder Funkfrequenz-Kommunikationen verwendet, wobei die Knotenvorrichtung ausgehend von einer anderen Knotenvorrichtung des Stromversorgungsnetzes über mindestens zwei unterschiedliche Kommunikationsrouten erreichbar ist, wobei die Knotenvorrichtung enthält:

Einrichtungen zum Erhalt eines Routenpreises für jede der Kommunikationsrouten; und
Einrichtungen zur Auswahl, unter den Kommunikationsrouten, der Kommunikationsroute, die dem geringsten Routenpreis entspricht,
**dadurch gekennzeichnet, dass** für eine gegebene Route der Routenpreis (RCk) gleich der Summe der Verbindungspreise (LC$_{i,j}$) zwischen zwei aufeinanderfolgenden Knotenvorrichtungen i und j auf der Route ist, der Verbindungspreis (LC$_{i,j}$) zwischen zwei aufeinanderfolgenden Knotenvorrichtungen gleich einer zwischen einem maximalen Wert unter einem Preis der Verbindung in einer Vorwärtsrichtung (LC$_{i \to j}$) und einem Verbindungspreis in einer Rückwärtsrichtung (LC$_{j \to i}$ gewichteten Summe und einem Verhältnis zwischen einer Anzahl von aktiven Routen und einer maximalen Anzahl von aktiven Routen einer Routingtabelle der Knotenvorrichtung j ist, und wobei der Verbindungspreis LC$_{i-j}$ in der Vorwärtsrichtung bzw. LC$_{j \to i}$ in der Rückwärtsrichtung folgendermaßen berechnet wird:

$$LC_{i \to j} = adpKhr * MOD_{Khr} + \frac{Min_{LC_{i \to j}}}{1 + \sum_{m=0, m \neq 0}^{NBP-1}\left(\frac{Min_{LC_{i \to j}} * adpKmb}{LC_{i \to j}[m] + 255}\right)}$$

oder folgendermaßen:

$$LC_{i \to j} = adpKhr * MOD_{Khr} + \frac{1}{\sum_{m=0}^{NBP-1}\left(\frac{1}{LC_{i \to j}[m]}\right)}$$

wobei $LC_{i \to j}[m]$ der Verbindungspreis in der Vorwärtsrichtung für ein Frequenzband mit dem Index m ist;
$MOD_{Khr}$ ist für einen hyperrobusten Modus gleich 1, sonst 0, wobei der hyperrobuste Modus ein Übertragungsmodus ist, bei dem eine Knotenvorrichtung eine gleiche Nachricht gleichzeitig auf einer Vielzahl von Frequenzbändern überträgt;

*NBP* ist eine Anzahl von Frequenzbändern einer Einheit von für die Übertragung verwendeten Frequenzbändern, wobei die Einheit von Frequenzbändern mindestens zwei unterschiedliche Frequenzbänder enthält;

$Min_{LC_{i \to j}} = min(LC_{i \to j}[m])$ und entspricht dem Frequenzband mit dem Index $m_0$; und

*adpKhr* und *adpKmb* sind Gewichtungsfaktoren.

**8.** Vermaschtes Stromversorgungsnetz, das Powerline- und/oder Funkfrequenz-Kommunikationen verwendet, das eine Knotenvorrichtung nach Anspruch 7 enthält.

**9.** Computerprogrammprodukt, **dadurch gekennzeichnet, dass** es Anweisungen enthält, um das Verfahren nach einem der Ansprüche 1 bis 6 durch eine Knotenvorrichtung durchzuführen, wenn das Programm von einem Prozessor der Knotenvorrichtung ausgeführt wird.

**10.** Speicherträger, **dadurch gekennzeichnet, dass** er ein Computerprogramm speichert, das Anweisungen enthält, um das Verfahren nach einem der Ansprüche 1 bis 6 durch eine Knotenvorrichtung durchzuführen, wenn das Programm von einem Prozessor der Knotenvorrichtung ausgeführt wird.

**Claims**

**1.** A method for selecting a communication route between a first node device and a second node device of a mesh powerline and/or radio-frequency communication network, said second node device being able to be reached from the first node device by at least two different communication routes, said method comprising:

- obtaining (S210) a route cost for each of said communication routes; and
- selecting (S230), from said communication routes, the communication route corresponding to the lowest route cost;

**characterised in that**, for a given route, the route cost (RCk) is equal to the sum of the link costs ($LC_{i,j}$) between two successive nodes i and j on said route, said link cost ($LC_{i,j}$) between two successive node devices is equal to a weighted sum between a maximum value from a cost of the link in a forward direction ($LC_{i,j}$) and a link cost in a backward direction ($LC_{j \to i}$) and a ratio between a number of active routes and a maximum number of active routes of a routing table of the node device j and wherein said link cost $LC_{i \to j}$ in the forward direction, or respectively $LC_{j \to i}$ in the backward direction, is calculated as follows

$$LC_{i \to j} = adpKhr * MOD_{Khr} + \frac{Min_{LC_{i \to j}}}{1 + \sum_{m=0, m \neq m0}^{NBP-1}\left(\frac{Min_{LC_{i \to j}} * adpKmb}{LC_{i \to j}[m] * 255}\right)}$$

or as follows:

$$LC_{i \to j} = adpKhr * MOD_{Khr} + \frac{1}{\sum_{m=0}^{NBP-1}\left(\frac{1}{LC_{i \to j}[m]}\right)}$$

where $LC_{i \to j}[m]$ is said link cost in the forward direction for a frequency band of index m;

$MOD_{Khr}$ is equal to 1 for a hyper-robust node, 0 otherwise, said hyper-robust mode being a transmission mode wherein a node device transmits the same message simultaneously on a plurality of frequency bands;

NBP is a number of frequency bands in a set of frequency bands used for the transmission, said set of frequency bands comprising at least two different frequency bands;

$Min_{LC_{i \to j}} = min(LC_{i \to j}[m])$ and corresponds to the frequency band of index $m_0$; and *adpKhr* and *adpKmb* are weighting factors.

**2.** The method according to claim 1, wherein said powerline link cost ($LC_{i,j}$) between two successive node devices of indices i and j is calculated as follows:

$$LC_{i,j} = max\left(LC_{i \to j}, LC_{j \to i}\right) + adpKrt * \frac{NumberOfActiveRoutes_{PLC}}{MaximumNumberOfActiveRoutes}$$

$$+ adpKh$$

where *adpKrt* and *adpKh* are weighting factors:

$LC_{i \to j}$ is the link cost in the forward direction and $LC_{j \to i}$ is the link cost in the backward direction;
*NumberOfActiveRoutes*$_{PLC}$ is a number of active routes in the internal routing table of the node device j that use powerline communications;
*MaximumNumberOfActiveRoutes* is a maximum number of active routes in the internal routing table of the node device j.

**3.** The method according to claim 1 or 2, wherein said radio-frequency link cost ($LC_{i,j}$) between two successive node devices of indices i and j is calculated as follows:

$$LC_{i,j} = max\left(LC_{i \to j}, LC_{j \to i}\right) + adpKrt_{RF} * \frac{NumberOfActiveRoutes_{RF}}{MaximumNumberOfActiveRoutes}$$

$$+ adpKh_{RF}$$

where *adpKrt*$_{RF}$ and *adpKh*$_{RF}$ are weighting factors;
$LC_{i \to j}$ is the link cost in the forward direction and $LC_{j \to i}$ is the link cost in the backward direction;
*NumberOfActiveRoutes*$_{RF}$ is a number of active routes in the internal routing table of the node device j that use radio-frequency communications;
*MaximumNumberOfActiveRoutes* is a maximum number of active routes in the internal routing table of the node device j.

**4.** The method according to one of claims 1 to 3, wherein said link cost $LC_{i \to j}[m]$ in the forward direction, and respectively $LC_{j \to i}[m]$ in the backward direction, for a powerline frequency band is calculated as follows:

$$LC_{i \to j}[m] = adpKr * MOD_{Kr} + adpKm * MOD_{Km}$$

$$+adpKc[m] * \frac{(MaximumNumberOfTones - NumberOfActiveTones)}{MaximumNumberOfTones}$$

$$+adpKq * MAX\left(0, MIN\left(1, \frac{adpHighLQIValue - LQI}{adpHighLQIValue - adpLowLQIValue}\right)\right)$$

where MODKr = 1 for a robust mode, 0 for the other modulations, a modulation according to said robust mode comprising successively a Reed-Solomon coding, a convolutional coding, a code repetition coding and a BPSK modulation;
*MOD*$_{Km}$ is equal to 3 for DBPSK or BPSK modulations including said robust mode, is equal to 2 for DQPSK or QPSK modulations, is equal to 1 for D8PSK or 8-PSK modulations and 0 for 16-QAM modulations;
adpKr, adpKm, adpKq are weighting factors;
adpKc[m] is a weighting factor defined per frequency band.
LQI is a value representing a quality of the link in the forward direction between the node devices i and j;
adpHighLQIValue and adpLowLQIValue are threshold values;
MaximumNumberOfTones is the number of sub-carriers available;
NumberOfActiveTones is the number of active sub-carriers.

**5.** The method according to one of claims 1 to 4, wherein said link cost $LC_{i \to j}[m]$ in the forward direction, and respectively $LC_{j \to i}[m]$ in the backward direction, for a radio-frequency channel is calculated as follows:

$$LC_{i \to j}[m] = adpKq_{RF}$$

$$* MAX\left(0, MIN\left(1, \frac{adpHighLQIValue_{RF} - LQI_{RF}}{adpHighLQIValue_{RF} - adpLowLQIValue_{RF}}\right)\right)$$

$$+ \frac{adpKdc_{RF} * DutyCyclePenalty}{100}$$

where :

- $adpKq_{RF}$ et $adpKdC_{RF}$ are weighting factors;
- adpHighLQIValue$_{RF}$ and adpLowLQIValue$_{RF}$ are threshold values;
- $LQI_{RF}$ is a value representing a quality of the radio-frequency link in the forward direction between the node devices i et j;
- DutyCyclePenalty is a value representing a degree of use of the radio frequency already reached with respect to a maximum authorised.

6. Method according to any one of claims 1 to 5, wherein said set of frequency bands comprises:

   - the CENELEC A frequency band;
   - the CENELEC B frequency band;
   - the FCC frequency band or the ARIB frequency band; and
   - the RF channel of G3-PLC Hybrid RF.

7. A node device of a mesh electrical supply network using powerline and/or radio-frequency communications, said node device being able to be reached from another node device of said electrical supply network by at least two different communication routes, said node device comprising:

   means for obtaining a route cost for each of said communication routes; and
   means for selecting, from said communication routes, the communication route corresponding to the lowest route cost,
   **characterised in that**, for a given route, the route cost (RCk) is equal to the sum of the link costs ($LC_{i,j}$) between two successive nodes i and j on said route, said link cost ($LC_{i,j}$) between two successive node devices is equal to a weighted sum between a maximum value from a cost of the link in a forward direction ($LC_{i,j}$) and a link cost in a backward direction ($LC_{j \to i}$) and a ratio between a number of active routes and a maximum number of active routes of a routing table of the node device j and wherein said link cost $LC_{i \to j}$ in the forward direction, or respectively $LC_{j \to i}$ in the backward direction, is calculated as follows

$$LC_{i \to j} = adpKhr * MOD_{Khr} + \frac{Min_{LC_{i \to j}}}{1 + \sum_{m=0, m \neq m0}^{NBP-1}\left(\frac{Min_{LC_{i \to j}} * adpKmb}{LC_{i \to j}[m] * 255}\right)}$$

or as follows

$$LC_{i \to j} = adpKhr * MOD_{Khr} + \frac{1}{\sum_{m=0}^{NBP-1}\left(\frac{1}{LC_{i \to j}[m]}\right)}$$

where $LC_{i \to j}$ [m] is said link cost in the forward direction for a frequency band of index m;
$MOD_{Khr}$ is equal to 1 for a hyper-robust node, 0 otherwise, said hyper-robust mode being a transmission mode wherein a node device transmits the same message simultaneously on a plurality of frequency bands;
NBP is a number of frequency bands in a set of frequency bands used for the transmission, said set of frequency bands comprising at least two different frequency bands;
$Min_{LCi \to j}$ = min( $LC_{i \to j}$ [m]) and corresponds to the frequency band of index $m_0$; and

*adpKhr* and *adpKmb* are weighting factors.

8. A mesh electrical supply network using powerline and/or radio-frequency communications, comprising a node device according to claim 7.

9. A computer program product, **characterised in that** it comprises instructions for implementing, by a node device, the method according to any one of claims 1 to 6, when said program is executed by a processor of the node device.

10. A storage medium, **characterised in that** it stores a computer program comprising instructions for implementing, by a node device, the method according to any one of claims 1 to 6, when said program is executed by a processor of the node device.

Fig. 1

Fig. 2

Début, m=0 — S300

Calculer $LC_{i \to j}[m]$ — S310

m++

m ≤ NBP-1 ? — S320

NON

Déterminer $Min\_LC_{i \to j}$ — S330

Calculer $LC_{i \to j}$ — S340

Fin — S350

Fig. 3

1401    1402    1403    130

PROC    RAM    ROM

1400

STCK    COM

1404    1405

Fig. 4

**EP 3 934 111 B1**